# EUROPEAN PATENT SPECIFICATION

(11) **EP 3 576 241 B1**
(45) Date of publication and mention of the grant of the patent: **29.07.2020**
(21) Application number: 18175438.3
(22) Date of filing: 01.06.2018
(51) Int. Cl.: H01M 10/42, H01M 10/44, H01M 10/48, H02J 1/00, H02J 1/08, H02J 7/00

(54) **BATTERY SYSTEM**
BATTERIESYSTEM
SYSTÈME DE BATTERIE

(43) Date of publication of application: 04.12.2019
(73) Proprietor: Samsung SDI Co., Ltd., Gyeonggi-do 17084 (KR)
(72) Inventor: Hofer, Maximilian, 8230 Hartberg (AT); Doczy, Stefan, 8054 Pirka (AT); Haindl, Michael, 8230 Hartberg (AT); Schalli, Gerald, 8046 Graz (AT); Birgit, Weissensteiner, 8010 Graz (AT); Kurcik, Peter, 8505 St. Nikolai im Sausal (AT); Marchl, Manfred, 8302 Nestelbach (AT)
(74) Representative: Gulde & Partner

(56) References cited:
- EP-A1- 3 316 440
- EP-A1- 3 327 895
- US-A1- 2002 167 291

## Description

### Field of the Invention

The present invention relates to a battery system with integrated redundant power supply for a control unit, such as e.g. a system basis chip of the battery system, and preferably with an integrated balancing among at least some of the battery cells of the battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises one or more of a battery management system (BMS), a battery management unit (BMU), and a cell supervision circuit (CSC). Such control units may be an integral part of the battery system and disposed within a common housing or may be part of a remote control unit communicating with the battery system via a suitable communication bus. These control units may perform various functions in the battery system. A CSC is usually equipped on battery module level and is configured for measuring cell voltages and temperatures and to provide cell balancing within the modules. A plurality of CSCs is usually connected for data transmission among each other and with a BMU. The BMU receives the voltage data from all battery modules, controls the battery system as a whole, and provides a communication interface to an exterior of the battery system for communicating with the electrical consumers, e.g. via a suitable communication bus such as a CAN or SPI interface.

For supplying an electric motor of a vehicle, a high voltage, such as 48 V, has to be supplied by the battery system. Further the battery system is connected to a 48V board net for supplying these electric consumers. However, the control units of the battery system usually operate at lower voltages. A battery system thus usually requires an additional 12 V supply that might be provided by a 12 V board net of the vehicle.

This approach is disadvantageous as security related functions of the battery system must be guaranteed at all time and hence the 12 V board system is drained even during the non-active phases of the vehicle. A self-supplied battery system is therefore preferred. EP 3 316 440 A1 discloses a high voltage battery system with a plurality of stacked battery cells divided in a first subset and a second subset of battery cells and a control unit power supplied by the first subset of battery cells. The battery system further comprises a DC/DC converter receiving the voltage of all stacked battery cells as input and outputting a stepped down voltage to the first subset of battery cells for balancing the subsets of battery cells.

It is an object of the present invention to provide a battery system with an integrated power supply for a control unit, such as e.g. a system basis chip of the battery system, which allows for a reliable power supply of the control unit and which is also cost sensitive.

### Description of the Invention

By means of the present invention, a battery system is provided that comprises a plurality of battery cells that are electrically connected in series between a first node and a second node. The plurality of battery cells may further comprise battery cells connected in parallel between the first node and the second node. Exemplarily, a plurality of submodules, each comprising a plurality of cells connected in parallel, may be connected in series between the first node and the second node. In other words, the added voltage of all battery cells connected in series between the first node and the second node applies between the first node and the second node. Preferably, a voltage between 36 V and 52 V, particularly preferred of 48 V, applies between the first node and the second node of the battery system.

The battery system further comprises an intermediate node dividing the plurality of battery cells in a first subset of battery cells and a second subset of battery cells. In other words, the added voltage of all battery cells connected in series between the first node and the intermediate node applies between the first node and the intermediate node and the added voltage of all battery cells connected in series between the intermediate node and the second node applies between the intermediate node and the second node. Preferably, the voltage applied between the first node and the intermediate node differs from the voltage applied between the second node and the intermediate node. Further preferred, the voltage applied between the first node and the intermediate node is between 12 V and 36 V, preferably from 12 V to 24 V, preferably ∼14 V. Preferably all battery cells of the battery system are equal.

Alternatively, the first subset and the second subset of battery cells comprise the same amount of battery cells connected in series and the nominal output voltage of the first subset equals that of the second subset of battery cells. Further preferred, the first subset and the second subset comprise the same amount of battery cells connected in parallel. Also preferred, each subset comprises a half of the battery cells connected in series between the first terminal and the second terminal. Alternatively, the amount of battery cells connected in parallel and/or in series in the first subset differs from the amount of battery cells connected in parallel and/or in series in the second subset. Further preferred, the battery cells of the first subset may comprise a different capacity than the battery cells of the second subset of cells.

The battery system further comprises a step-down converter that is connected in parallel with the plurality of battery cells between the first node and the second node. The step-down converter further has an output node to which an output voltage of the step-down converter is provided. Preferably, an input voltage of the step-down converter is the voltage applied between the first node and the second node and the output voltage applied to the output node is lower than the input voltage. In other words, the step-down converter is configured for converting an input voltage between the first node and the second node to a second voltage (output voltage) that applies to the output node, and preferably between the output node and the first node. Further preferred, the first node is on ground potential (GND). The converted voltage (output voltage) is lower than the initial voltage (input voltage). Preferably, the step-down converter is one of a buck converter, a buck-boost converter, a forward converter, a flyback converter, a full bridge converter, and a push-pull converter.

The battery system of the present invention further comprises a first diode that is interconnected between the intermediate node and the output node, wherein the anode of the first diode is connected to the intermediate node and the cathode of the intermediate node is connected to the output node. In the context of the present invention, a first diode refers to any component or circuitry interconnected between the intermediate node and the output node that allows an electric current to flow from the intermediate node to the output node but prevents an electric current to flow from the output node to the intermediate node. The battery system of the present invention further comprises a control unit that is interconnected between the output node and the first node and that is configured for controlling the step-down converter, preferably for controlling the output voltage of the step-down converter.

The battery system of the present invention provides a dual power supply, or in other words a redundant power supply, for the control unit of the battery system. Therein, the control unit is always supplied with a fraction of the total voltage of all battery cells of the battery system and thus under- and overvoltage with respect to the control electronics is avoided. In detail, the control unit is either supplied with the voltage of the first subset of battery cells via the first diode and the output node or the control unit is supplied with the output voltage of the step-down converter, i.e. the stepped down voltage of the whole plurality of battery cells, via the output node. Hence, the battery system of the present invention provides a dual or redundant power supply for the electronics of a control unit as integrated feature of the battery system.

The battery system of the present invention provides a cost-optimized approach for the electric supply of the electronics as no separate buck converter chip has to be used between a high voltage domain of the battery system, i.e. all cells of the battery system, and the control unit. Further preferred, the step-down converter of the battery system is configured to be switched off in a sleep mode of the control unit. In other words, the step-down converter does not provide an output voltage to the output node in a sleep mode of the control unit. Hence, the sleep current or standby current of the battery system is advantageously reduced as no step-down converter has to be operated permanently as the control unit is redundantly supplied via the first subset of battery cells. Meanwhile, a bleed out of the first subset is avoided by supplying the control unit via the step-down converter at least in active states of the control unit. Also, unwanted charging or overcharging of the first subset is avoided by the first diode.

In a particularly preferred embodiment, the first subset of battery cells supplies a voltage between 18 V and 26 V, preferably of 14 V. Further preferred, the output voltage of the step-down converter can be set between 18 V and 41 V, particularly preferred between 18 V and 36 V, and further preferred to around 24 V. The control unit is preferably configured to be safely supplied with a voltage between 12 V and 41 V, preferably between 18 V and 36 V, and further preferred with 14 V to 24 V, although it is configured to communicate with a 12 V domain. Particularly preferred, the intermediate node divides the plurality of battery cells such that the first subset of battery cells provides the operation voltage of the control unit. In other words, the operation voltage of the control unit applies between the intermediate and the first node.

According to particularly preferred embodiment of the present invention, the control unit comprises a system basis chip, SBC, and a battery management unit, BMU. Therein, the BMU is connected in series to the SBC, wherein the SBC is connected to the output node and the BMU is connected to the first node. Further preferred, the SBC is configured to supply the operation voltage of the BMU to a supply pin of the BMU. Preferably, the SBC is configured to provide the power supply for all further control electronics of the battery system.

Also preferred, the SBC is configured to provide further functions, particularly preferred a wake-up function, and also preferred a watchdog function. Therein, the SBC controls the battery system in a sleep mode of the further control units and, eventually activates further control units. The BMU is preferably configured to provide at least one control function with respect to one or more battery cells of the battery system. Particularly preferred, the BMU is configured to measure the voltage and/or temperature of at least one battery cell. Preferably, the BMU is also configured to provide active and/or passive balancing of at least one cell.

Further preferred, the SBC comprises an internal buck converter and can be safely supplied with an operation voltage between 6 V and 41 V. Hence, the step-down converter of the battery system can provide the SBC with a rather high output voltage, whereas the SBC provides further overvoltage protection to the BMU and preferably also to further control units.

Preferably, the step-down converter of the battery system comprises a third node and a first switch that is interconnected between the second node and the third node. The step-down converter preferably further comprises a second diode, wherein the anode of the second diode is connected to the first node and wherein the cathode of the second diode is connected to the third node. In the context of the present invention, a second diode refers to any component or circuitry interconnected between the first node and the third node that allows an electric current to flow from the first node to the third node but prevents an electric current to flow from the third node to the first node. The step-down converter further comprises an inductance that is interconnected between the third node and the output node and further comprises a capacitance that is interconnected between the inductance and the first node. In other words, the step-down converter is a buck converter. In this embodiment, the control unit, particularly preferred the BMU, is configured to control the first switch of the buck converter. Thereby, the control unit controls the duty cycle of the buck converter and hence the output voltage via PMW. Further preferred, in a sleep mode of the control unit, the first switch is configured to be set non-conductive. Particularly, in such sleep mode, the SBC is configured to provide no supply voltage to the BMU and the BMU does not set the first switch conductive. Preferably, the first switch is a MOSFET, such as e.g. a PNP MOSFET. Preferably, the BMU controls the signal applied to the gate of the MOSFET.

In a further preferred embodiment, the battery system further comprises a charging path that is connected in parallel to the first diode and that comprises a second switch. In other words, the charging path circumvents the first diode and allows for an electric current to flow from the output node to the intermediate node in dependence of the second switch's switching state. Hence, by controlling the second switch, the output voltage of the step-down converter can be utilized for active balancing of the battery system. If the second switch is set non-conductive, solely the output voltage of the step-down converter supplies the control unit (in dependence of the potential at the output node), while if the second switch is set conductive, the output voltage of the step-down converter charges the first subset of battery cells (in dependence of the potential at the output node). The battery system of the present invention thus allows for an integrated balancing between the first subset and the second subset of battery cells. Hence, eventual charging losses of the first subset due to supplying the control unit in a sleep mode of the control unit can be evened out, once the control unit becomes activated again.

In a particularly preferred embodiment, the charging path further comprises a constant current source that is interconnected between the cathode of the first diode and the second switch. Alternatively to the constant current source a current limiter can be used. Hence, overcharging of the first subset of battery cells can be effectively avoided. Preferably, the second switch is a PNP transistor, wherein the emitter of the PNP transistor is connected to the cathode of the first diode and wherein the collector of the PNP transistor is connected to the anode of the first diode. In this embodiment, the current limiter is advantageously realized in that a basis of the PNP transistor is connected to the emitter of the PNP transistor via a resistor network as well as to a collector of an additional NPN transistor, wherein an emitter of the NPN transistor is connected to the first node. By controlling the basis of the NPN transistor, the second switch functionality is thus realized, while the both transistors and the resistor network together function as the current limiter. Preferably, the control unit controls the signal applied to the basis or gate of the NPN transistor and controls the second switch.

Further preferred, the charging path comprises a fourth node that is interconnected between the anode of the first diode and the second switch. Hence, a current among or a voltage at the fourth node is indicative for the correct function of the first switch, i.e. the buck converter, and/or the second switch. Further preferred, the fourth node is connected to an input pin, particularly a diagnosis input pin, of the BMU. Further preferred in this embodiment, the BMU is configured for performing a diagnosis of the first switch and/or the second switch based on a voltage or current signal that applies to the input pin. The BMU may be further configured to output a control signal based on the diagnosis, e.g. if a failure of the first switch and/or the second switch is detected. Based on the control signal, the control unit or another electronic component of the battery system might e.g. switch of the battery system or output a warning.

Further preferred, a first resistor is interconnected between the fourth node and the anode of the first diode, and further a second resistor as well as a third resistor are both interconnected between the fourth node and the first node. The input pin of the BMU is then connected to a fifth node that is located between the second resistor and the third resistor. Then the diagnosis signal applied to the input pin is the voltage drop due to the first to third resistors.

Also preferred, the battery system comprises an additional load that is interconnected between the output node and the first node. This additional load is then supplied via the output node, particularly if the control unit is active and the step-down converter supplies the output node. Preferably, a third switch is interconnected between the additional load and the first node and further preferred the third switch is controlled by the control unit and/or is configured to be set non-conductive in a sleep mode of the control unit. If the control unit comprises a SBC with internal buck converter, the output voltage of the step-down converter applied to the output node is preferably adapted to the operational voltage of the additional load, as long as this voltage is within the safe operation voltage of the SBC.

Further preferred, a high voltage load is interconnected between the first node and the second node. Alternatively, the battery system is configured to be connected to a high voltage load outside the battery system that is to be electrically interconnected between the first node and the second node. In an electric vehicle, such high voltage load may be e.g. the electric engine or any other component that is to be supplied by the high voltage domain. In such embodiment, the additional load preferably is a relay that is configured for controlling a fourth switch, wherein the fourth switch is interconnected between the high voltage load and one of the first node and the second node. In other words, a battery disconnect unit, BDU, may be realized by the combination of the relay and the fourth switch. The battery system of the present invention advantageously allows for supplying the relay with either its switching or holding current, while supplying the control unit (SBC) with its operation voltage at the same time. Preferably, the control unit, particularly preferred the BMU, is configured to control at least one of the third switch and the fourth switch.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: schematically illustrates a battery system according to a first embodiment;
- Fig. 2: schematically illustrates a battery system according to a second embodiment;
- Fig. 3: schematically illustrates a battery system according to a third embodiment;
- Fig. 4: schematically illustrates a battery system according to a fourth embodiment;
- Fig. 5: schematically illustrates a battery system according to a fifth embodiment;
- Fig. 6: schematically illustrates a current over the first diode; and
- Fig. 7: schematically illustrates a voltage at the output node and a current over the charging path.

### Detailed Description of the Drawings

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

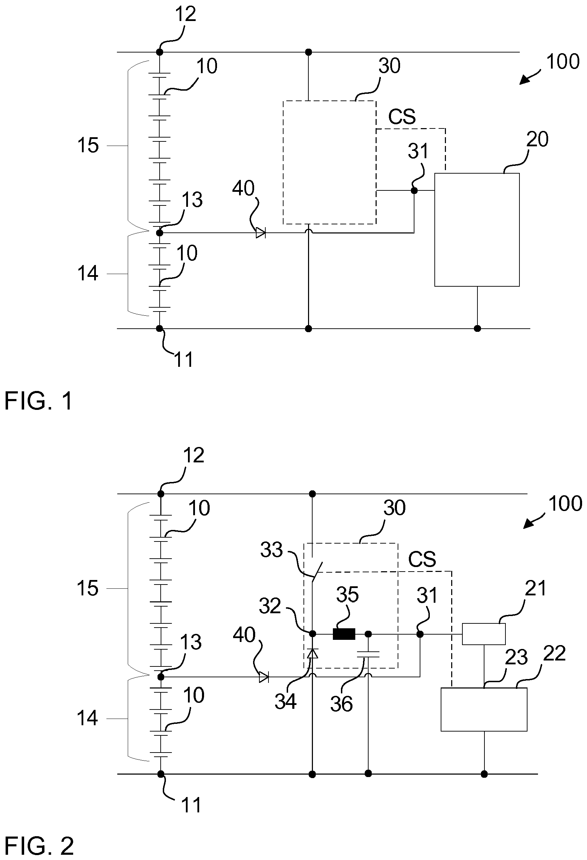

Figure 1 schematically illustrates a battery system 100 according to a first embodiment of the present invention. The battery system 100 comprises a plurality of twelve battery cells 10 that are connected in series between a first node 11 and a second node 12. Each battery cell 10 provides a voltage of about 4 V so that a voltage of about 48 V applies between the first node 11 and the second node 12. The stack of battery cells 10 further comprises an intermediate node 13 that divides the cell stack into a first subset 14 of battery cells 10 and a second subset 15 of battery cells. Therein, four battery cells 10 are disposed between the first node 11 and the intermediate node 13 and eight battery cells 10 are disposed between the intermediate node 13 and the second node 12. Hence, a voltage of about 16 V applies between the first node 11 and the intermediate node 13 and a voltage of about 32 V applies between the intermediate node 13 and the second node 12.

A step-down converter 30 is connected in parallel to the battery cells 10 between the first node 11 and the second node 12 such that the full voltage of about 48 V is the input voltage of the step-down converter 30. The step-down converter 30 comprises an output node 31 to which an output voltage of the step-down converter 30 applies. Precisely, the output voltage of the step-down converter 30 applies between the output node 31 and the first node 11, wherein the first node 11 is set to ground potential, GND. The output node 31 of the step-down converter 30 is connected to the intermediate node 13 via a first diode 40. Therein, the anode of the first diode 40 is connected to the intermediate node 13 and the cathode of the first diode 40 is connected to the output node 31.

A control unit 20 is interconnected between the output node 31 and the first node 11. The control unit 20 is further configured to output a control signal, CS, to the step down converter 30 in order to control the step-down converter 30, particularly the output voltage of the step-down converter 30. If the step-down converter 30 is switched off, the control unit 20 is solely supplied via the first diode 40 and the output node 31. In other words, the voltage of the first subset 14 of battery cells 10, i.e. about 16 V, applies to the control unit 20. If the step-down converter 30 is switched on, an output voltage of the step-down converter 30 is applied to the output node 31 that is stepped down from the input voltage of about 48 V. If the output voltage of the step-down converter 30 at output node 31 exceeds the voltage of the first subset 14 of battery cells 14, a current from the output node 31 towards the intermediate node 13 is blocked by diode 40 and the control unit 20 is supplied solely by the step-down converter 30. Thus, a redundant dual power supply is provided by battery system 100, wherein overcharging of the first battery subset 14 is prevented by first diode 40. In the battery system 100, the step-down converter 30 is switched on solely if the control unit 20 is active and is switched off if the control unit 20 is in a sleep mode.

Figure 2 schematically illustrates a battery system 100 according to a second embodiment of the present invention. In Figure 2 identic reference signs to those of in Figure 1 refer to identic components as in Figure 1, a repeated description of which is omitted.

In the battery system 100 of Fig. 2, the step-down converter 30 is a buck converter 30 that comprises a third node 32 and a first switch 33 interconnected between the second node 12 and the third node 32. The buck converter 30 further comprises a second diode 34, wherein the anode of the second diode 34 is connected to the first node 11 and the cathode of the second diode 34 is connected to the third node 32. The buck converter 30 further comprises an inductance 35 interconnected between the third node 32 and the output node 31 and a capacitance 36 interconnected between the inductance 35 and the first node 11 in parallel to the second diode 34.

The control unit of Fig. 2 comprises a system basis chip 21, SBC, connected in series with a battery management unit 22, BMU. The SBC 21 is configured to receive either the voltage of the first subset 14 of battery cells 10 or the output voltage of the step-down converter 30 via the output node 31 and to supply an operation voltage of the BMU 22 to the BMU 22 via a supply pin 23 of the BMU 22. Therein, the operation voltage of the BMU 22 is about 12 V and hence lower than the voltage applied to the output node 31. The BMU 22 is further configured to output a control signal, CS, to the first switch 33 of the buck converter 30 that is set conductive in response to receiving the control signal CS and is set non-conductive in response to not receiving the control signal, CS. BMU 22 controls the duty cycle of the buck converter 30 by pulse width modulation and the output voltage supplied to output node 31.

In sleep mode BMU 22 continuously outputs no control signal CS to the first switch 33 and thus the buck converter 30 is switched off. Then, SBC 21 is supplied by the first subset 14 of battery cells 10 via first node 31 and may not provide the operation voltage of the BMU 22 to the BMU 22. If a wake up event is recognized by the SBC 21, e.g. by receiving a wake up signal or by determining that a predetermined time has past, the SBC 21 might transmit a wake up signal to the BMU 22, e.g. by providing the operational voltage of the BMU 22 to the BMU 22 for a short period of time. Then, BMU 22 starts controlling first switch 33 and hence the buck converter 30 starts to supply a voltage to the SBC via the output node 31. This voltage is sufficient for continuously providing the BMU 22 with its operation voltage.

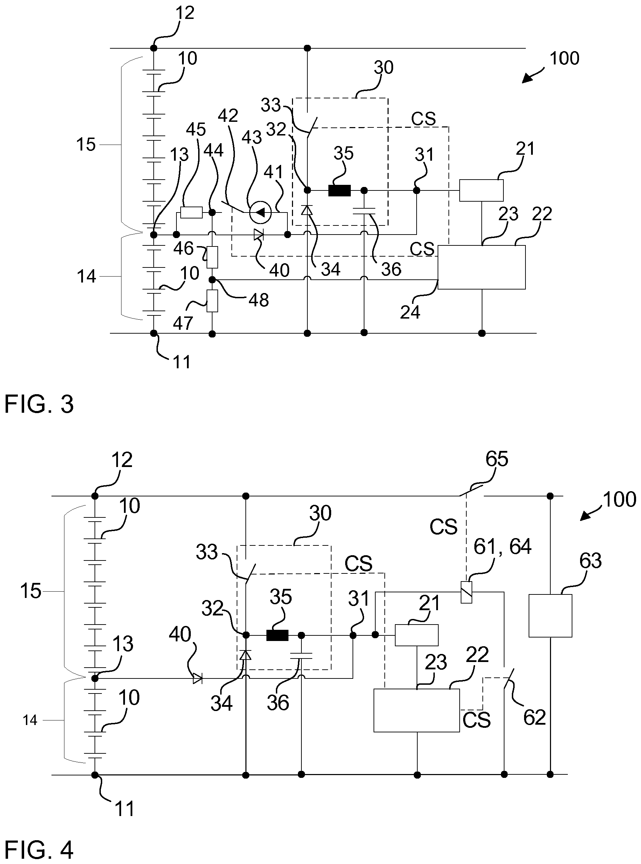

Figure 3 schematically illustrates a battery system 100 according to a third embodiment of the present invention. In Figure 3 identic reference signs to those of in Figures 1, 2 refer to identic components and a repeated description thereof is omitted.

The battery system 100 of Fig. 3 further comprises a charging path 41 connected in parallel to the first diode 40. The charging path 41 comprises a constant current source 43 and a second switch 42, wherein the constant current source 43 is connected to the cathode of the first diode 40 and the second switch 42 is connected to the anode of the first diode 40. The BMU 22 of Fig. 3 is further configured to control the second switch 42 by outputting another control signal, CS, to the second switch 42. The charging path 41 allows for charging the first subset 14 of cells 10 with the output voltage of the buck converter 30 via output node 31.

If the first switch 33 is continuously set non-conductive, e.g. in sleep mode, the SBC 21 is supplied only by the first subset 14 of cells 10 via first diode 40 and output node 31. Hence, the first subset 14 is drained more than the second subset 15 of battery cells. If the SBC 21 and the BMU 22 wake up, the BMU 22 controls the first switch 33 to be set conductive and non-conductive in alternating manner in order to operate the buck converter 30 and hence the buck converter 30 supplies a voltage to the output node 31. If this voltage exceeds the voltage provided by the first subset 14, charging of the first subset 14 can be enabled by setting the second switch 42 conductive. Thus, a constant current flows from the output node 31 via charging path 41 into the first subset 14 of battery cells 10 and charges them.

The charging path 41 further comprises a fourth node 44 interconnected between the second switch 42 and the anode of the first diode 40. A first resistor 45 is connected between the fourth node 44 and the intermediate node 13. Further, a second resistor 46 and a third resistor 47 are interconnected between the fourth node 44 and the first node 11. A fifth node 48 is located between the second resistor 46 and the third resistor 47 and connected to an diagnosis input pin 24 of the BMU 22. The signal at the diagnosis input 24 corresponds to the voltage drop over resistors 45, 46, and 47 due to the charging current from output node 31 to first subset 14 of cells 10. This signal is indicative of both the correct function of the buck converter 30, particularly the first switch 33, and the second switch 42. Hence, the signal at the diagnosis input pin 24 can be used for determining whether an erroneous state is present in the battery system 100, e.g. for emergency shutting off the battery system 100.

If the second switch 42 is set to be non-conductive, the control units 21, 22 of Figure 3 are operated with dual power supply as already described with respect to Figures 1 and 2.

Figure 4 schematically illustrates a battery system 100 according to a fourth embodiment of the present invention. In Figure 4 identic reference signs to those of in Figures 1 to 3 refer to identic components and a repeated description thereof is omitted.

The battery system 100 of Fig. 4 further comprises a high voltage load 63 that is interconnected between the first node 11 and second node 12 downstream of all other components of battery system 100 or even outside of battery system 100. The high voltage load 63 might be an electric engine of an electric vehicle comprising the battery system 100.

The battery system 100 further comprises an additional load 61 that is interconnected between the output node 31 and the first node 11 in parallel to the control units, i.e. SBC 21 and BMU 22. In Fig. 4 the additional load 61 is depicted as a relay 64. A third switch 62 is interconnected between the additional load 61 / relay 64 and the first node 11. The third switch 62 is controlled by the BMU 22 that can thus control that the output voltage of the buck converter 30 is supplied to the relay 64 via output node 31. The relay 64 controls a fourth switch 65 interconnected between the second node 12 and the high voltage load 63. Particularly, by controlling the third switch 62 to be set conductive, the relay 64 sets the fourth switch 65 to be non-conductive. Hence, the BMU 22 controlling the third switch 62 can act as a battery disconnect unit, BDU, for disconnecting the battery system 100 of its electric consumers in a case of an abnormal operation state of the battery system 100, e.g. in response to receiving a signal indicative for a fault state on diagnosis input pin 24.

In sleep mode of the battery system 100, i.e. in sleep mode of the BMU 22, the SBC 21 is supplied solely by the first subset 14 of battery cells 10 via first diode 40 and output node 31. Therein, the first switch 33 and the third switch 62 are set to be continuously non-conductive, while the fourth switch 65 might be set to be either conductive or non-conductive. For wake up, the SBC 21 supplies an operation voltage of the BMU 22 to the BMU 22 for a short time, e.g. by a controlled discharge of a capacitor of the SBC 21 or the like. Then, the BMU 22 starts to control the first switch 33 for operating the buck converter 30 and thus a higher voltage is applied to the output node 31 by the buck converter 30. Also, the BMU 22 may control the fourth switch 65 to be set conductive for supplying the high voltage load 63 by the battery system 100. If an abnormal state is detected, the BMU 22 may close the third switch 62 for providing the output voltage of buck converter 30 at output node 31 to the relay 64. Further, the BMU 22 might control the first switch 33 such that the voltage at output node 31 is increased to the switching voltage of relay 64. This voltage might exceed the operation voltage of the BMU 22 but is still within the save operation voltage range of the SBC 21, which therefrom supplies an adequate operation voltage to the BMU 22. In response to receiving the switching voltage from output node 31, the relay 64 sets the fourth switch 65 to be non-conductive and hence separates the battery system 100 and the high voltage load 63.

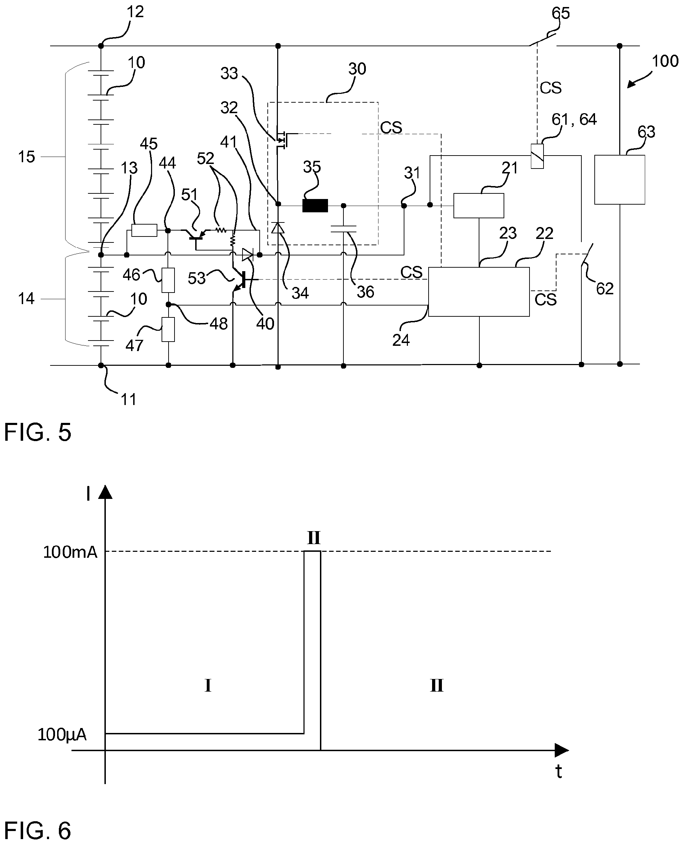

Figure 5 schematically illustrates a battery system 100 according to a fifth embodiment of the present invention. In Figure 5 identic reference signs to those of in Figures 1 to 4 refer to identic components and a repeated description thereof is omitted.

In the battery system 100 of Fig. 5, the first switch 33 is realized with a MOSFET, the gate voltage of which is controlled by the BMU 22. Further, the second switch is realized by a PNP transistor 51, the basis of which is connected to its emitter via a resistor network 52 and to the collector of a NPN transistor 53, the emitter of which is connected to the first node 11 and the current at the basis of which is controlled by the BMU 22. The combination of the PNP transistor 51, the resistor network 52 and the NPN transistor 53 realizes the second switch and the current limiter in the charging path 41, wherein the switching signal for allowing a charging current through charging path 41 is provided to the basis of NPN transistor 53.

Figure 6 schematically illustrates a current over the first diode 40 of the battery system 100 of Fig. 5. Therein, during sleep mode of battery system 100 and BMU 22, the sleep current is 100 µA. This is the current required by the SBC 21 for performing basic watch dog functions and for providing a wake up functionality. During a short start-up phase which lasts only some milliseconds, the SBC 21 draws an increased current from up to 100 mA in order to wake up the BMU 22. Once the BMU 22 is woken up it operates the buck converter 30 via the first switch 33 and thus an output voltage is supplied to the output node 31 that exceeds the voltage of the first subset 14 of battery cells 10. Hence, no current flows via the first diode 40. If the current limiter realized by the transistors 51, 53 and the resistor network 52 limits the current through the charging path 41 to be 30 mA, then the charge misbalance due to one month of sleep mode can be equalized by charging the first subset 14 of cells 10 for at total charging time t = (24 ^{∗} 30 ^{∗} 100 µA)/(30 mA) of 2.4 hours.

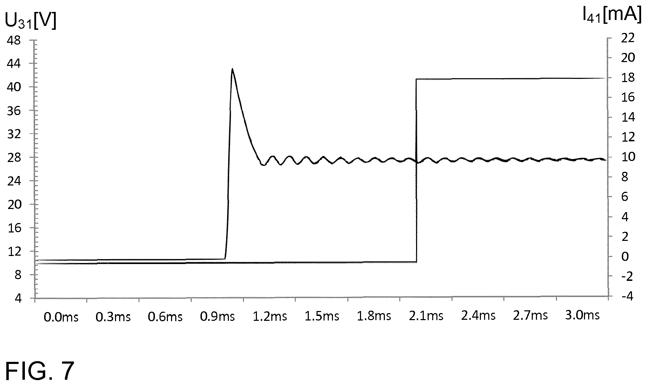

Figure 7 schematically illustrates a voltage at the output node 31 and a current over the charging path 41 of the battery system of Fig. 5. The upper curve is the output voltage of the initially switched-off buck converter 30 at the output node 31. At approximately 1 ms the buck converter 30 is switched on and a voltage transient occurs at output node 31. However, such transient can be avoided by appropriately controlling the first switch 33 by BMU 22. Then, the buck converter 30 provides a nearly constant output voltage of about 28 V to output node 31.

The current over the charging path 41 is initially zero until after approximately 2 ms the base current of the NPN transistor 53 is controlled to supply the voltage of the first node 11 to the basis of PNP transistor 51 for setting its channel conductive. The resistor network 52 then allows for a constant charging current of about 18 mA via the charging path 41.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 10: battery cell
- 11: first node
- 12: second node
- 13: intermediate node
- 14: first subset of battery cells
- 15: second subset of battery cells

- 20: control unit
- 21: system basis chip (SBC)
- 22: battery management unit (BMU)
- 23: supply pin
- 24: input pin

- 30: step-down converter
- 31: output node
- 32: third node
- 33: first witch
- 34: second diode
- 35: inductance
- 36: capacitance
- 37: MOSFET transistor

- 40: first diode
- 41: charging path
- 42: second switch
- 43: constant current source
- 44: fourth node
- 45: first resistor
- 46: second resistor
- 47: third resistor
- 48: fifth node

- 51: PNP transistor
- 52: resistor network
- 53: NPN transistor

- 61: additional load
- 62: third switch
- 63: high voltage load
- 64: relay
- 65: fourth switch

## Claims

1. Battery system (100), comprising
a plurality of battery cells (10) electrically connected in series between a first node (11) and a second node (12);
an intermediate node (13) dividing the plurality of battery cells (10) in a first subset (14) of battery cells (10) electrically connected in series and/or in parallel between the first node (11) and the intermediate node (13) and in a second subset (15) of battery cells (10) electrically connected in series and/or in parallel between the intermediate node (13) and the second node (12);
a step-down converter (30) connected in parallel with the plurality of battery cells (10) between the first node (11) and the second node (12) and having an output node (31); and
a control unit (20) interconnected between the output node (31) and the first node (11) and being configured for controlling the step-down converter (30),
**characterized in that** the battery system (100) further comprises:
a first diode (40), the anode of which is connected to the intermediate node (13) and the cathode of which is connected to the output node (31).

2. Battery system (100) according to claim 1, wherein the step-down converter (30) is configured to be switched off in a sleep mode of the control unit (20).

3. Battery system (100) according to claim 1 or 2, wherein the control unit (20) comprises a system basis chip (21), SBC, and a battery management unit (22), BMU, connected in series, wherein the SBC (21) is connected to the output node (31) and the BMU (22) is connected to the first node (11).

4. Battery system (100) of claim 3, wherein the SBC (21) is configured to supply the operation voltage of the BMU (22) to a supply pin (23) of the BMU (22), and preferably comprises an internal buck converter.

5. Battery system (100) according to any one of the claims 1 to 4, wherein the step-down converter (30) comprises a third node (32); a first switch (33) interconnected between the second node (12) and the third node (32); a second diode (34), the anode of which is connected to the first node (11) and the cathode of which is connected to the third node (32); an inductance (35) interconnected between the third node (32) and the output node (31); and a capacitance (36) interconnected between the inductance (35) and the first node (11).

6. Battery system (100) according to claim 5, wherein the first switch (33) is a MOSFET transistor (37).

7. Battery system (100) according to any one of the claims 1 to 6, further comprising a charging path (41) connected in parallel to the first diode (40) and comprising a second switch (42).

8. Battery system (100) according to claim 7, wherein the charging path (41) further comprises a constant current source (43) or a current limiter interconnected between the cathode of the first diode (40) and the second switch (42).

9. Battery system (100) according to claim 7 or 8, wherein the second switch (42) is a PNP transistor (51), the emitter of which is connected to the cathode of the first diode (40) and the collector of which is connected to the anode of the first diode (40).

10. Battery system (100) according to claim 9, wherein a basis of the PNP transistor (51) is connected to the emitter of the PNP transistor (51) via a resistor network (52) and to a collector of a NPN transistor (53), wherein an emitter of the NPN transistor (53) is connected to the first node (11).

11. Battery system (100) according to any one of the claims 7 to 10, wherein the charging path (41) further comprises a fourth node (44) interconnected between the anode of the first diode (40) and the second switch (42) and connected to an input pin (24) of the BMU (22).

12. Battery system (100) according to claim 11, further comprising a first resistor (45) interconnected between the fourth node (44) and the intermediate node (13), and a second resistor (46) and a third resistor (47) both interconnected between the fourth node (44) and the first node (11), wherein the input pin (24) is connected to a fifth node (48) between the second resistor (46) and the third resistor (47).

13. Battery system (100) according to any one of the claims 1 to 12, further comprising an additional load (61) interconnected between the output node (31) and the first node (11) and a third switch (62) interconnected between the additional load (61) and the first node (11).

14. Battery system (100) according to claim 13, further comprising a high voltage load (63) or being configured to be connected to a high voltage load outside the battery system (100), wherein the high voltage load (63) is interconnected between the first node (11) and the second node (12), and wherein the additional load (61) is a relay (64) configured for controlling a fourth switch (65) interconnected between the high voltage load (63) and one of the first node (11) and the second node (12).

15. Battery system (100) according to at least one of the claims 5 to 7, 9, 10, 13, and 14, wherein the control unit (20) is configured to control at least one of the first switch (33), the MOSFET transistor (37), the second switch (42), the PNP transistor (51), the NPN transistor (53), the third switch (62), and the fourth switch (65).

## Patentansprüche

1. Batteriesystem (100), umfassend
mehrere Batteriezellen (10), die zwischen einem ersten Knoten (11) und einem zweiten Knoten (12) in Reihe elektrisch verbunden sind;
einen Zwischenknoten (13), der die mehreren Batteriezellen (10) in eine erste Teilmenge (14) von Batteriezellen (10), die zwischen dem ersten Knoten (11) und dem Zwischenknoten (13) in Reihe und/oder parallel elektrisch verbunden sind, und eine zweite Teilmenge (15) von Batteriezellen (10), die zwischen dem Zwischenknoten (13) und dem zweiten Knoten (12) in Reihe und/oder parallel elektrisch verbunden sind, teilt;
einen Abwärtswandler (30), der zwischen dem ersten Knoten (11) und dem zweiten Knoten (12) parallel mit den mehreren Batteriezellen (10) verbunden ist und einen Ausgangsknoten (31) aufweist; und
eine Steuereinheit (20), die zwischen den Ausgangsknoten (31) und den ersten Knoten (11) gekoppelt und zum Steuern des Abwärtswandlers (30) konfiguriert ist,
**dadurch gekennzeichnet, dass** das Batteriesystem (100) ferner Folgendes umfasst:
eine erste Diode (40), deren Anode mit dem Zwischenknoten (13) verbunden ist und deren Kathode mit dem Ausgangsknoten (31) verbunden ist.

2. Batteriesystem (100) nach Anspruch 1, wobei der Abwärtswandler (30) so konfiguriert ist, dass er sich in einem Ruhemodus der Steuereinheit (20) ausschaltet.

3. Batteriesystem (100) nach Anspruch 1 oder 2, wobei die Steuereinheit (20) einen System-Basis-Chip (21), SBC, und eine Batterie-Management-Einheit (22), BMU, umfasst, die in Reihe verbunden sind, wobei der SBC (21) mit dem Ausgangsknoten (31) verbunden ist und die BMU (22) mit dem ersten Knoten (11) verbunden ist.

4. Batteriesystem (100) nach Anspruch 3, wobei der SBC (21) konfiguriert ist, um einen Versorgungsanschluss (23) der BMU (22) mit der Betriebsspannung des BMU (22) zu versorgen, und vorzugsweise einen internen Abwärtsregler umfasst.

5. Batteriesystem (100) nach einem der Ansprüche 1 bis 4, wobei der Abwärtswandler (30) einen dritten Knoten (32), einen ersten Schalter (33), der zwischen den zweiten Knoten (12) und den dritten Knoten (32) gekoppelt ist, eine zweite Diode (34), deren Anode mit dem ersten Knoten (11) verbunden ist und deren Kathode mit dem dritten Knoten (32) verbunden ist, eine Induktivität (35), die zwischen den dritten Knoten (32) und den Ausgangsknoten (31) gekoppelt ist, und eine Kapazität (36), die zwischen die Induktivität (35) und den ersten Knoten (11) gekoppelt ist, umfasst.

6. Batteriesystem (100) nach Anspruch 5, wobei der erste Schalter (33) ein MOSFET-Transistor (37) ist.

7. Batteriesystem (100) nach einem der Ansprüche 1 bis 6, ferner umfassend einen Ladeweg (41), der mit der ersten Diode (40) parallel verbunden ist, und einen zweiten Schalter (42).

8. Batteriesystem (100) nach Anspruch 7, wobei der Ladeweg (41) ferner eine konstante Stromquelle (43) oder einen zwischen die Kathode der ersten Diode (40) und den zweiten Schalter (42) gekoppelten Strombegrenzer umfasst.

9. Batteriesystem (100) nach Anspruch 7 oder 8, wobei der zweite Schalter (42) ein PNP-Transistor (51) ist, dessen Emitter mit der Kathode der ersten Diode (40) verbunden ist und dessen Kollektor mit der Anode der ersten Diode (40) verbunden ist.

10. Batteriesystem (100) nach Anspruch 9, wobei eine Basis des PNP-Transistors (51) mit dem Emitter des PNP-Transistors (51) über ein Widerstandsnetzwerk (52) und mit einem Kollektor eines NPN-Transistors (53) verbunden ist, wobei ein Emitter des NPN-Transistors (53) mit dem ersten Knoten (11) verbunden ist.

11. Batteriesystem (100) nach einem der Ansprüche 7 bis 10, wobei der Ladeweg (41) ferner einen vierten Knoten (44) umfasst, der zwischen die Anode der ersten Diode (40) und den zweiten Schalter (42) gekoppelt und mit einem Eingangsanschluss (24) der BMU (22) verbunden ist.

12. Batteriesystem (100) nach Anspruch 11, ferner umfassend einen ersten Widerstand (45), der zwischen den vierten Knoten (44) und den Zwischenknoten (13) gekoppelt ist, und einen zweiten Widerstand (46) und einen dritten Widerstand (47), die beide zwischen den vierten Knoten (44) und den ersten Knoten (11) gekoppelt sind, wobei der Eingangsanschluss (24) zwischen dem zweiten Widerstand (46) und dem dritten Widerstand (47) mit einem fünften Knoten (48) verbunden ist.

13. Batteriesystem (100) nach einem der Ansprüche 1 bis 12, ferner umfassend eine zusätzliche Last (61), die zwischen den Ausgangsknoten (31) und den ersten Knoten (11) gekoppelt ist, und einen dritten Schalter (62), der zwischen die zusätzliche Last (61) und den ersten Knoten (11) gekoppelt ist.

14. Batteriesystem (100) nach Anspruch 13, das ferner eine Hochspannungslast (63) umfasst oder dazu konfiguriert ist, mit einer Hochspannungslast außerhalb des Batteriesystems (100) verbunden zu sein, wobei die Hochspannungslast (63) zwischen den ersten Knoten (11) und den zweiten Knoten (12) gekoppelt ist, und wobei die zusätzliche Last (61) ein Relay (64) ist, das zum Steuern eines vierten Schalters (65) konfiguriert ist, der zwischen die Hochspannungslast (63) und den ersten Knoten (11) oder den zweiten Knoten (12) gekoppelt ist.

15. Batteriesystem (100) nach mindestens einen der Ansprüche 5 bis 7, 9, 10, 13 und 14, wobei die Steuereinheit (20) konfiguriert ist, um mindestens einen des ersten Schalters (33), des MOSFET-Transistors (37), des zweiten Schalters (42), des PNP-Transistors (51), des NPN-Transistors (53), des dritten Schalters (62) und des vierten Schalters (65) zu steuern.

## Revendications

1. Système de batterie (100), comprenant :
une pluralité d'éléments de batterie (10) connectés électriquement en série entre un premier nœud (11) et un deuxième nœud (12) ;
un nœud intermédiaire (13) divisant la pluralité d'éléments de batterie (10) en un premier sous-ensemble (14) d'éléments de batterie (10) connectés électriquement en série et/ou en parallèle entre le premier nœud (11) et le nœud intermédiaire (13) et en un second sous-ensemble (15) d'éléments de batterie (10) connectés électriquement en série et/ou en parallèle entre le nœud intermédiaire (13) et le deuxième nœud (12) ;
un convertisseur abaisseur de tension (30) connecté en parallèle à la pluralité d'éléments de batterie (10) entre le premier nœud (11) et le deuxième nœud (12) et présentant un nœud de sortie (31) ; et
une unité de commande (20) interconnectée entre le nœud de sortie (31) et le premier nœud (11) et étant configurée de manière à commander le convertisseur abaisseur de tension (30) ;
le système de batterie (100) étant **caractérisé en ce qu'**il comprend en outre :
une première diode (40), dont l'anode est connectée au nœud intermédiaire (13) et dont la cathode est connectée au nœud de sortie (31).

2. Système de batterie (100) selon la revendication 1, dans lequel le convertisseur abaisseur de tension (30) est configuré pour être mis hors tension dans un mode de veille de l'unité de commande (20).

3. Système de batterie (100) selon la revendication 1 ou 2, dans lequel l'unité de commande (20) comprend une puce de base système (21), SBC, et une unité de gestion de batterie, BMU, (22), connectées en série, où la puce SBC (21) est connectée au nœud de sortie (31) et l'unité BMU (22) est connectée au premier nœud (11).

4. Système de batterie (100) selon la revendication 3, dans lequel la puce SBC (21) est configurée pour fournir la tension de fonctionnement de l'unité BMU (22) à une broche d'alimentation (23) de l'unité BMU (22), et comprend de préférence un convertisseur dévolteur interne.

5. Système de batterie (100) selon l'une quelconque des revendications 1 à 4, dans lequel le convertisseur abaisseur de tension (30) comprend un troisième nœud (32) ; un premier commutateur (33) interconnecté entre le deuxième nœud (12) et le troisième nœud (32) ; une seconde diode (34), dont l'anode est connectée au premier nœud (11) et dont la cathode est connectée au troisième nœud (32) ; une bobine d'induction (35) interconnectée entre le troisième nœud (32) et le nœud de sortie (31) ; et une capacité (36) interconnectée entre la bobine d'induction (35) et le premier nœud (11).

6. Système de batterie (100) selon la revendication 5, dans lequel le premier commutateur (33) est un transistor à effet de champ à semi-conducteur à oxyde métallique, MOSFET (37).

7. Système de batterie (100) selon l'une quelconque des revendications 1 à 6, comprenant en outre un trajet de charge (41) connecté en parallèle à la première diode (40) et comprenant un deuxième commutateur (42).

8. Système de batterie (100) selon la revendication 7, dans lequel le trajet de charge (41) comprend en outre une source de courant constant (43) ou un limiteur de courant interconnecté entre la cathode de la première diode (40) et le deuxième commutateur (42).

9. Système de batterie (100) selon la revendication 7 ou 8, dans lequel le deuxième commutateur (42) est un transistor PNP (51), dont l'émetteur est connecté à la cathode de la première diode (40) et dont le collecteur est connecté à l'anode de la première diode (40).

10. Système de batterie (100) selon la revendication 9, dans lequel une base du transistor PNP (51) est connectée à l'émetteur du transistor PNP (51) par l'intermédiaire d'un réseau de résistances (52) et à un collecteur d'un transistor NPN (53), où un émetteur du transistor NPN (53) est connecté au premier nœud (11).

11. Système de batterie (100) selon l'une quelconque des revendications 7 à 10, dans lequel le trajet de charge (41) comprend en outre un quatrième nœud (44) interconnecté entre l'anode de la première diode (40) et le deuxième commutateur (42), et connecté à une broche d'entrée (24) de l'unité BMU (22).

12. Système de batterie (100) selon la revendication 11, comprenant en outre une première résistance (45) interconnectée entre le quatrième nœud (44) et le nœud intermédiaire (13), et une deuxième résistance (46) et une troisième résistance (47) toutes deux interconnectées entre le quatrième nœud (44) et le premier nœud (11), dans lequel la broche d'entrée (24) est connectée à un cinquième nœud (48) entre la deuxième résistance (46) et la troisième résistance (47).

13. Système de batterie (100) selon l'une quelconque des revendications 1 à 12, comprenant en outre une charge supplémentaire (61) interconnectée entre le nœud de sortie (31) et le premier nœud (11), et un troisième commutateur (62) interconnecté entre la charge supplémentaire (61) et le premier nœud (11).

14. Système de batterie (100) selon la revendication 13, comprenant en outre une charge haute tension (63), ou étant configuré pour être connecté à une charge haute tension à l'extérieur du système de batterie (100), dans lequel la charge haute tension (63) est interconnectée entre le premier nœud (11) et le deuxième nœud (12), et dans lequel la charge supplémentaire (61) est un relais (64) configuré pour commander un quatrième commutateur (65) interconnecté entre la charge haute tension (63) et l'un parmi le premier nœud (11) et le deuxième nœud (12).

15. Système de batterie (100) selon l'une quelconque des revendications 5 à 7, 9, 10, 13 et 14, dans lequel l'unité de commande (20) est configurée pour commander au moins l'un parmi le premier commutateur (33), le transistor MOSFET (37), le deuxième commutateur (42), le transistor PNP (51), le transistor NPN (53), le troisième commutateur (62), et le quatrième commutateur (65).
